# EUROPÄISCHE PATENTSCHRIFT

(11) **EP 1 845 738 B1**
(45) Veröffentlichungstag und Bekanntmachung des Hinweises auf die Patenterteilung: **29.09.2010**
(21) Anmeldenummer: 07006709.5
(22) Anmeldetag: 30.03.2007
(51) Int. Cl.: H04W 4/12, H04M 1/725, H04M 3/537

(54) **Verfahren, Rechnereinheit sowie Kommunikationssystem zur Benachrichtigung eines Nutzers eines elektronischen Endgeräts**
Method, computer unit and communications system for informing the user of an electronic terminal
Procédé, unité informatique tout comme système de communication destinés à informer un utilisateur d'un terminal électronique

(30) Priorität: 11.04.2006 DE 102006017052
(43) Veröffentlichungstag der Anmeldung: 17.10.2007
(73) Patentinhaber: Vodafone Holding GmbH, 40213 Düsseldorf (DE)
(72) Erfinder: Wortmann, Hubertus, Dipl.-Ing., 40764 Langenfeld (DE)
(74) Vertreter: Müller, Thomas

(56) Entgegenhaltungen:
- EP-A- 1 351 475
- WO-A-2005/076528
- WO-A-2006/015673
- WO-A1-98/45383
- DE-A1- 10 338 237
- US-A1- 2004 125 925

## Beschreibung

Die vorliegende Erfindung betrifft zunächst ein Verfahren zur Benachrichtigung eines Nutzers eines elektronischen Endgeräts, welches Bestandteil eines Kommunikationsnetzes ist, dass für den Nutzer eine Sprachnachricht vorliegt, gemäß dem Oberbegriff von Patentanspruch 1. Weiterhin betrifft die vorliegende Erfindung eine Rechnereinheit, welche Bestandteil eines Kommunikationsnetzes ist und welche zur Benachrichtigung eines Nutzers eines elektronischen Endgeräts ausgebildet ist, dass für den Nutzer eine Sprachnachricht vorliegt. Schließlich betrifft die Erfindung auch ein Kommunikationssystem gemäß dem Oberbegriff von Patentanspruch 8.

Derartige Verfahren sind bereits seit langem bekannt und dienen beispielsweise im Zusammenhang mit Mobilfunknetzen dazu, den Nutzer eines elektronischen Endgeräts, bei dem es sich dann in der Regel um ein Mobiltelefon handelt, über den Eingang einer Sprachnachricht zu informieren. Hierbei handelt es sich um eine Anrufbeantworterfunktion, bei der die eingegangene Sprachnachricht netzbetreiberseitig gespeichert und dem Nutzer zugänglich gemacht wird. Dazu ist wenigstens eine Rechnereinheit vorgesehen, welche Bestandteil des Mobilfunknetzes ist und welche zur Benachrichtigung eines Nutzers des elektronischen Endgeräts ausgebildet ist, dass für diesen Nutzer eine Sprachnachricht vorliegt. Hierzu wird von der Rechnereinheit eine elektronische Nachricht über den Eingang der Sprachnachricht erzeugt und an das Endgerät des Nutzers übertragen, wobei diese elektronische Nachricht dem Nutzer den Zeitpunkt des Eingangs der Sprachnachricht in der Rechnereinheit anzeigt. Ferner wird dem Nutzer die absolute Anzahl neu eingegangener Sprachnachrichten mitgeteilt.

Diese aus dem allgemeinen Stand der Technik bekannte Lösung weist jedoch eine Reihe von Nachteilen auf. Zum einen wird dem Nutzer nicht angezeigt, wer Absender der Sprachnachricht ist. Ebenso erhält der Nutzer keinerlei Angabe über den Inhalt und/oder den Umfang der eingegangenen Sprachnachricht(en).

Aus der WO 98/45383 A1 ein Verfahren und ein System zum Überbringen einer Sprachnachricht von einem Sprachnachrichtensystem durch ein Mobilfunknetz bekannt, bei dem angezeigt wird, dass in einer Teilnehmer-Mailbox eine Sprachnachricht vorliegt. Das Sprachnachrichtsystem weist eine Rechnereinheit auf, die zur Benachrichtigung eines Nutzers eines elektronischen Endgerätes ausgebildet ist. In der Rechnereinheit wird die Nachricht des abgespeichert und für den Nutzer zugänglich gemacht. Ferner wird in der Rechnereinheit ein Informationspaket erzeugt und dem Nutzer übermittelt, welches über den Eingang einer neuen Sprachnachricht informiert. Das Informationspaket enthält beispielsweise die Nummer des Anrufers und, wenn bekannt, auch den Namen des Anrufers. Das dem Nutzer des elektronischen Endgerätes übertragene Informationspaket, insbesondere die Nummer und ggf. der Name des Anrufers, wird ferner in dem Display des elektronischen Endgerätes dem Nutzer angezeigt.

Aus der WO 2006/015673 A1 sind eine Methode und Vorrichtung zum Extrahieren von essenziellen Informationen aus einer eingehenden Sprachnachricht bekannt. Hierbei wird die eingehende Sprachnachricht in einen Text konvertiert. Aus dem Text werden dann besondere Informationen herausgefiltert und diese dem Nutzer auf dessen mobilem Endgerät angezeigt.

Der vorliegenden Erfindung liegt die Aufgabe zugrunde, ein Verfahren der eingangs genannten Art derart weiterzubilden, das dem Nutzer eines elektronischen Endgeräts auf einfache Weise ermöglicht, abzuschätzen, ob es sich lohnt die gesamte Sprachnachricht abzuhören oder zu lesen. Weiterhin sollen eine entsprechend verbesserte Rechnereinheit sowie ein verbessertes Kommunikationssystem bereitgestellt werden.

Diese Aufgabe wird erfindungsgemäß gelöst durch ein Verfahren zur Benachrichtigung eines Nutzers eines elektronischen Endgeräts mit den Merkmalen gemäß des unabhängigen Patentanspruchs 1, durch eine Rechnereinheit gemäß Patentanspruch 7 sowie durch ein Kommunikationssystem gemäß Patentanspruch 8. Weitere Vorteile, Merkmale, Details, Aspekte und Effekte der Erfindung ergeben sich aus den Unteransprüchen sowie der Beschreibung. Merkmale und Details, die im Zusammenhang mit dem erfindungsgemäßen Verfahren zur Benachrichtigung eines Nutzers eines elektronischen Endgeräts beschrieben sind, gelten dabei selbstverständlich auch im Zusammenhang mit der erfindungsgemäßen Rechnereinheit sowie dem erfindungsgemäßen Kommunikationssystem und umgekehrt.

Gemäß dem ersten Aspekt der Erfindung wird die Aufgabe durch ein Verfahren zur Benachrichtigung eines Nutzers eines elektronischen Endgeräts, welches Bestandteil eines Kommunikationsnetzes ist, dass für den Nutzer eine Sprachnachricht vorliegt, wobei wenigstens eine Rechnereinheit vorgesehen ist, welche Bestandteil des Kommunikationsnetzes ist und welche zur Benachrichtigung eines Nutzers eines elektronischen Endgeräts ausgebildet ist, dass für den Nutzer eine Sprachnachricht vorliegt, wobei in der Rechnereinheit die eingegangene Sprachnachricht zumindest zeitweilig abgespeichert und für den Nutzer zugänglich gemacht wird und wobei von der Rechnereinheit eine elektronische Nachricht über den Eingang der Sprachnachricht erzeugt und an das elektronische Endgerät des Nutzers übertragen wird, die den Zeitpunkt des Eingangs der Sprachnachricht in der Rechnereinheit anzeigt, und wobei in der Rechnereinheit die elektronische Nachricht um Identifikationsdaten des Erzeugers der Sprachnachricht und/oder um zumindest Teile des in Text umgewandelten Inhaltes der Sprachnachricht erweitert wird, wobei die erweiterte elektronische Nachricht an das Endgerät des Nutzers übertragen wird und wobei die Identifikationsdaten des Erzeugers der Sprachnachricht und/oder zumindest die Teile des in Text umgewandelten Inhaltes der Sprachnachricht auf dem Endgerät angezeigt werden, und bei dem bei Erweiterung der elektronischen Nachricht um zumindest Teile des Inhaltes der Sprachnachricht, der erweiterten elektronischen Nachricht Informationsdaten zum Umfang des übertragenen Inhalts der Sprachnachricht im Vergleich zur gesamten eingegangenen Sprachnachricht hinzugefügt werden, gelöst.

Durch die Erweiterung der elektronischen Nachricht in der Rechnereinheit um Identifikationsdaten des Erzeugers der Sprachnachricht und/oder um zumindest Teile des in Text umgewandelten Inhaltes der Sprachnachricht erhält der Nutzer eines elektronischen Endgeräts, für den die Sprachnachricht bestimmt ist, eine Vorabinformation, eine so genannte Vorschau, über die Sprachnachricht. Die komprimierte Vorabinformation ermöglicht dem Nutzer ein schnelles und einfaches Entscheiden, ob er die gesamte Sprachnachricht abrufen möchte, oder nicht. Der Empfänger der Sprachnachricht erhält beispielsweise eine Andeutung über den Inhalt der Sprachnachricht und eine Aufforderung den gesamten Inhalt der Sprachnachricht von der Rechnereinheit abzurufen. Alternativ oder zusätzlich zu dem Inhalt der Sprachnachricht können dem Nutzer des elektronischen Endgeräts Identifikationsdaten des Erzeugers der Sprachnachricht angezeigt werden. Hierdurch erhält der Nutzer des elektronischen Endgeräts, insbesondere des Mobiltetefons, Kenntnis über den Absender der Sprachnachricht. Dies kann beispielsweise dann wichtig für den Nutzer sein, wenn der Nutzer auf eine Nachricht eines bestimmten Absenders wartet, er aber nicht eine Vielzahl von Sprachnachrichten von der Speichereinrichtung der Rechnereinheit auf sein elektronisches Endgerät laden und anschauen möchte. Bei der Erweiterung der elektronischen Nachricht greift die Rechnereinheit auf Daten zu dem Absender und/oder auf Daten aus der Sprachnachricht zurück. Beispielsweise kann die Erweiterung der elektronischen Nachricht darin bestehen, dass die ersten oder die letzten Worte der Sprachnachricht in Text umgewandelt und der elektronischen Nachricht hinzugefügt werden. Somit erhält der Nutzer des elektronischen Endgeräts, für den die Sprachnachricht bestimmt ist, neben dem Zeitpunkt des Eingangs der Sprachnachricht in der Rechnereinheit, weiter informative Daten, die ihm eine Entscheidung über die Wichtigkeit einer Sprachnachricht erleichtern.

Dadurch, dass bei der Erweiterung der elektronischen Nachricht um zumindest Teile des Inhaltes der Sprachnachricht, der erweiterten elektronischen Nachricht Informationsdaten zum Umfang des übertragenen Inhalts der Sprachnachricht im Vergleich zur gesamten eingegangenen Sprachnachricht hinzugefügt werden, erhält der Nutzer des elektronischen Endgerätes eine genaue Information über die Länge der Sprachnachricht. Handelt es sich um eine kurze Sprachnachricht reicht dem Nutzer vielleicht bereits die Information, die ihm durch die elektronische Nachricht gesendet worden ist. Ist die Sprachnachricht deutlich länger, als die elektronischen Nachricht, so hat er immer noch die Möglichkeit die Sprachnachricht abzurufen.

Besonders bevorzugt ist ein Verfahren, bei dem die erweiterte elektronische Nachricht in Form einer Textnachricht, insbesondere in Form einer Textnachricht nach dem SMS-Standard (Short Messaging Service), an das elektronische Endgerät des Nutzers übertragen wird. Hierdurch kann der Nutzer des elektronischen Endgeräts, insbesondere des Mobiltelefons, die Nachricht lesen, braucht sie aber nicht abhören. Dies ist insbesondere dann vorteilhaft, wenn es dem Nutzer des elektronischen Endgerätes aufgrund von äußeren Umständen nicht möglich ist die bereitgestellte Sprachnachricht anzuhören. Zum Anhören muss der Empfänger das elektronische Endgerät an sein Ohr halten bzw. er muss Kopfhörer verwenden. Dies ist auffällig und in bestimmten Situationen nicht angebracht. Falls der Nutzer des elektronischen Endgerätes eine dringende Sprachnachricht erwartet, diese aber nicht anhören kann, weil er beispielsweise in einem Meeting sitzt und es unhöflich wäre die Nachricht anzuhören, kann er leicht die erweiterte elektronische Nachricht in Form einer Textnachricht ansehen, ohne dass dies auffällt. Dabei ist frei, ob die erweiterte elektronische Nachricht die gesamte Sprachnachricht oder Teile der Sprachnachricht in Form einer Textnachricht wiedergibt.

Vorteilhaft ist ein derartiges Verfahren zur Benachrichtigung eines Nutzers eines elektronischen Endgeräts, welches Bestandteil eines Kommunikationsnetzes ist, dass für den Nutzer eine Sprachnachricht vorliegt, bei dem die elektronische Nachricht um Identifikationsdaten in Form einer Absenderkennung des Erzeugers der Sprachnachricht, insbesondere in Form einer Telefonnummer und/oder eines Namens, erweitert wird. Hierdurch erhält der Nutzer des elektronischen Endgerätes Informationen zu dem Absender der Sprachnachricht. Die Wichtigkeit einer Sprachnachricht ist für den Empfänger häufig u.a. daran zu erkennen, von wem die Sprachnachricht kommt. Sieht der Nutzer des elektronischen Endgerätes den Namen oder die Telefonnummer des Absenders der Sprachnachricht, hat er in der Regel genug Informationen, um darüber zu entscheiden, ob der die Sprachnachricht sofort oder später von der Rechnereinheit abruft. Der Name des Anrufers könnte einem im Kommunikationsnetz gespeicherten Adressbuch des jeweiligen Benutzers entnommen werden, an welches die im Adressbuch auf dem Mobiltelefon gespeicherten Kontaktdaten mittels Synchronisation übertragen wurden.

Ferner bevorzugt ist ein Verfahren, bei dem die Rechnereinheit eine Einrichtung zur automatischen Spracherkennung aufweist, durch die die Sprachnachricht in der Rechnereinheit zumindest teilweise in eine Textnachricht umgewandelt wird, und bei dem zumindest Teile der in eine Textnachricht umgewandelten Inhalte der Sprachnachricht in der Rechnereinheit der elektronischen Nachricht hinzugefügt werden. Durch die Einrichtung zur automatischen Spracherkennung kann die Rechnereinheit einzelne Wörter der Sprachnachricht erkennen und in eine Textnachricht einfügen. Die Einrichtung zur automatischen Spracherkennung setzt gesprochene Wörter in analoge bzw. digitale Sprachsignale um. Die Spracherkennung ist ein Verfahren der Sprachanalyse, bei dem ein computerbasiertes System mit automatischer Spracherkennung (ASR; ASR = Automatic Speech Recognition) die eingegebenen Sprachinformationen, d.h. die digitalen Sprachsignale, analysiert, und zwar in Bezug auf die gesprochenen Wörter, auf deren Bedeutung und in Bezug auf die charakteristischen Merkmale des Sprechers. Die automatische Spracherkennung stellt die technische Adaption der Sprachanalyse in Form der automatischen Interpretation von menschlicher Sprache dar. Die automatische Spracherkennung umfasst die Erkennung von Sprache, Schlüsselwörtern und Sätzen und deren Bedeutung, ebenso wie die Identifizierung eines Sprechers für sicherheitsrelevante Funktionen, wie die Zugriffsberechtigung oder die Autorisierung. Durch den Einsatz einer Einrichtung zur automatischen Spracherkennung kann eine Sprachnachricht gezielt nach bestimmten Wörtern durchsucht werden.

Weiterhin ist ein Verfahren bevorzugt einsetzbar, bei dem die Einrichtung zur automatischen Spracherkennung eine Analyseeinrichtung aufweist, in welcher zumindest Teile der Inhalte der Sprachnachricht quantitativ und/oder qualitativ bewertet werden. Durch die Möglichkeit der quantitativen und/oder qualitativen Bewertung des Inhaltes der Sprachnachricht können vorgegebene Wörter gezielt ermittelt werden und als Textnachricht, insbesondere als SMS, dem Nutzer des elektronischen Endgerätes zugesendet werden.

Durch die Analyseeinrichtung kann beispielsweise festgestellt werden, wie häufig ein bestimmtes Wort in einer Sprachnachricht gefallen ist. Die Analyseeinrichtung kann beispielsweise die gleichen Wörter einer Sprachnachricht aufsummieren. Die quantitative Bewertung kann auch Lautstärken ermitteln. Die Lautstärke kann beispielsweise in Dezibel ermittelt werden. Die Ergebnisse der quantitativen Bewertung können in der Rechnereinheit gespeichert und der elektronischen Nachricht angehängt werden. Aufgrund der Analyseeinrichtung kann unter anderem festgestellt werden, ob ein Absender einer Sprachnachricht bestimmte Wörter besonders betont oder besonders laut sagt. Diese können dann durch die Analyseeinrichtung ermittelt werden und als SMS an den Nutzer des elektronischen Gerätes, d.h. an den Empfänger, gesendet werden. Im Gegenteil zur quantitativen Bewertung, wo es auf Häufigkeiten gefallener Worte einer Sprachnachricht geht, kann eine qualitative Bewertung verschiedene andere Aspekte einer Sprachnachricht analysieren. So kann die Analyseeinrichtung die Emotionalität des Absenders messen. Dies kann durch Ermittlung der Tonhöhe und die Modulation der Stimme erfolgen. Modulation ist die Veränderung von Signalparametern eines Trägers in Abhängigkeit von einem modulierenden Signal. Das Trägersignal ist dabei ein zeitabhängiges Signal, beispielsweise eine Trägerschwingung oder eine Pulskette, das in seiner Amplitude oder in seiner zeitlichen Relation durch das Aufprägen des Modulationssignals verändert wird. Durch die qualitative Bewertung der Sprachnachricht kann beispielsweise die Stimmung, die Gefühlslage des Absenders festgestellt werden und entsprechend der Gefühlslage ein Textbaustein der Textnachricht hinzugefügt werden, die diese Gefühlslage wiedergibt. So kann beispielsweise neben dem Namen des Erzeugers der Sprachnachricht ein Wort, wie "sauer", "ängstlich", "fröhlich", etc., angezeigt werden durch die elektronische Nachricht.

Ein weiterer vorteilhafter Verfahrensschritt sieht vor, dass die Analyseeinrichtung eine Komparatoreinrichtung aufweist, in der die analysierten Inhalte der Sprachnachricht mit festgelegten oder veränderbaren Referenzsprachinhalten, die in einer der Rechnereinheit zugeordneten Speichervorrichtung abgelegt sind, verglichen werden und dass bei Übereinstimmung von Inhalten der Sprachnachricht mit Referenzsprachinhalten diese übereinstimmenden Inhalte der elektronischen Nachricht hinzugefügt werden. Durch den Vergleich der analysierten Inhalte der Sprachnachricht mit festgelegten oder veränderbaren Referenzsprachinhalten in der Komparatoreinrichtung der Analyseeinrichtung können schnell und gezielt bestimmte Wörter aus einer Sprachnachricht ermittelt werden, um diese dann der elektronischen Nachricht hinzuzufügen. Die Referenzsprachinhalte können beispielsweise Namen, Schlüsselwörter oder Telefonnummern sein, nach denen gesucht werden kann. Die Referenzsprachinhalte sind in einer der Rechnereinheit zugeordneten Speichervorrichtung abgelegt und können jederzeit verändert werden. Die Erstellung der Referenzsprachinhalte bzw. deren Änderung kann insbesondere durch den Nutzer eines elektronischen Endgerätes vorgenommen. Hierdurch kann jeder Empfänger von Sprachnachrichten selber bestimmen, nach welchen Referenzsprachinhalten Sprachnachrichten, die für ihn bestimmt sind, durchsucht werden sollen und bei Übereinstimmungen von Wörtern in der Sprachnachricht mit Referenzsprachinhalten diese Übereinstimmungen als Erweiterung der elektronischen Nachricht angehängt werden sollen.

Das Verfahren, wie zuvor geschildert, ermöglicht dem Empfänger einer Sprachnachricht eine Vorschau auf den Inhalt der Sprachnachricht. Die Vorschau erhält er in Form eine Textnachricht, insbesondere einer SMS, wodurch er geräuschlos die Informationen anrufen kann.

Die Erfindung wird ferner durch eine Rechnereinheit, welche Bestandteil eines Kommunikationsnetzes ist und welche zur Benachrichtigung eines Nutzers eines elektronischen Endgeräts ausgebildet ist, dass für den Nutzer eine Sprachnachricht vorliegt, wobei diese Mittel zur Durchführung eines zuvor geschilderten Verfahrens zur Benachrichtigung eines Nutzers eines elektronischen Endgeräts, welches Bestandteil eines Kommunikationsnetzes ist, dass für den Nutzer eine Sprachnachricht vorliegt, aufweist, gelöst. Eine derartige Rechnereinheit speichert die eingegangene Sprachnachricht eines Absender/Erzeugers zumindest zeitweilig und macht sie für den Nutzer eines elektronischen Endgerätes, insbesondere eines Mobiltelefons, zugänglich. Ferner erzeugt eine derartige Rechnereinheit eine elektronische Nachricht über den Eingang der Sprachnachricht und überträgt diese an das elektronische Endgerät des Nutzers/Empfängers. In der Rechnereinheit wird die elektronische Nachricht um Identifikationsdaten des Erzeugers der Sprachnachricht und/oder um zumindest Teile des Inhaltes der Sprachnachricht erweitert und die Rechnereinheit überträgt die erweiterte elektronische Nachricht an das elektronische Endgerät des Nutzers, so dass die Identifikationsdaten des Erzeugers der Sprachnachricht und/oder zumindest die Teile des Inhaltes der Sprachnachricht auf dem elektronischen Endgerät des Empfängers angezeigt werden.

Die erfindungsgemäße Rechnereinheit weist vorteilhafterweise eine Umwandlungseinrichtung auf, so dass die erweiterte elektronische Nachricht in Form einer Textnachricht, insbesondere in Form einer Textnachricht nach dem SMS-Standard, an das elektronische Endgerät des Nutzers übertragen werden kann. Ferner kann durch eine derartige Umwandlungseinrichtung die elektronische Nachricht um Identifikationsdaten in Form einer Absenderkennung des Erzeugers der Sprachnachricht, insbesondere in Form einer Telefonnummer und/oder eines Namens, erweitert werden.

Die Rechnereinheit weist bevorzugt eine Einrichtung zur automatischen Spracherkennung auf, durch die die Sprachnachricht in der Rechnereinheit zumindest teilweise in eine Textnachricht umgewandelt wird. Durch die Einrichtung zur automatischen Spracherkennung kann die Rechnereinheit einzelne Wörter der Sprachnachricht erkennen und in eine Textnachricht einfügen. Die Einrichtung zur automatischen Spracherkennung setzt gesprochene Wörter in analoge bzw. digitale Sprachsignale um. Die Rechnereinheit ist ferner derart ausgebildet, dass zumindest Teile der in eine Textnachricht umgewandelten Inhalte der Sprachnachricht in der Rechnereinheit der elektronischen Nachricht hinzugefügt werden.

Die Rechnereinheit weist ferner eine Analyseeinrichtung auf, in welcher zumindest Teile der Inhalte der Sprachnachricht quantitativ und/oder qualitativ bewertet werden können. Die Analyseeinrichtung der Rechnereinheit weist bevorzugt eine Komparatoreinrichtung auf, in der die analysierten Inhalte der Sprachnachricht mit festgelegten oder veränderbaren Referenzsprachinhalten, die in einer der Rechnereinheit zugeordneten Speichervorrichtung abgelegt sind, verglichen werden und bei Übereinstimmung von Inhalten der Sprachnachricht mit Referenzsprachinhalten diese übereinstimmenden Inhalte der elektronischen Nachricht hinzugefügt werden.

Gemäß des dritten Aspektes der Erfindung wird die Aufgabe durch ein Kommunikationssystem, aufweisend ein Kommunikationsnetz, eine Vielzahl von elektronischen Endgeräten sowie eine Rechnereinheit, welche Bestandteil des Kommunikationsnetzes ist und welche zur Benachrichtigung eines Nutzers eines elektronischen Endgeräts ausgebildet ist, dass für den Nutzer eine Sprachnachricht vorliegt, wobei die Rechnereinheit Mittel zur Durchführung des zuvor erwähnten Verfahrens aufweist, gelöst. Die Rechnereinheit weist bevorzugt die Mittel und Merkmale der zuvor beschriebenen Rechnereinheit auf. Durch ein derartiges Kommunikationssystem wird ein System geschaffen, dass einem Nutzer eines elektronischen Endgerätes, insbesondere eines Mobiltelefons, anzeigt, wer Absender der für den Nutzer des elektronischen Endgerätes bestimmten Sprachnachricht ist. Ferner kann durch ein derartiges Kommunikationssystem der Nutzer des elektronischen Endgerätes auf eine einfache und schnelle Art und Weise eine Angabe über den Inhalt und/oder den Umfang der eingegangenen Sprachnachricht(en) erhalten.

Bevorzugt ist dabei ein Kommunikationssystem, bei dem das Kommunikationsnetz als Mobilfunknetz ausgebildet ist.

Ferner ist ein Kommunikationssystem vorteilhaft, bei dem wenigstens ein Endgerät als Mobiltelefon und/oder PDA (Personal Digital Assistant) und/oder als Smartphone und/oder als Notebook ausgebildet ist. Derartige Endgeräte ermöglichen die einfache Anzeige der Identifikationsdaten des Erzeugers der Sprachnachricht und/oder zumindest von Teilen des Inhaltes der Sprachnachricht auf dem Display des Endgerätes.

## Patentansprüche

1. Verfahren zur Benachrichtigung eines Nutzers eines elektronischen Endgeräts, welches Bestandteil eines Kommunikationsnetzes ist, dass für den Nutzer eine Sprachnachricht vorliegt, wobei wenigstens eine Rechnereinheit vorgesehen ist, welche Bestandteil des Kommunikationsnetzes ist und welche zur Benachrichtigung eines Nutzers eines elektronischen Endgeräts ausgebildet ist, dass für den Nutzer eine Sprachnachricht vorliegt, wobei in der Rechnereinheit die eingegangene Sprachnachricht zumindest zeitweilig abgespeichert und für den Nutzer zugänglich gemacht wird und wobei von der Rechnereinheit eine elektronische Nachricht über den Eingang der Sprachnachricht erzeugt und an das Endgerät des Nutzers übertragen wird, die den Zeitpunkt des Eingangs der Sprachnachricht in der Rechnereinheit anzeigt, wobei in der Rechnereinheit die elektronische Nachricht um Identifikationsdaten des Erzeugers der Sprachnachricht und/oder um zumindest Teile des in Text umgewandelten Inhaltes der Sprachnachricht erweitert wird, dass die erweiterte elektronische Nachricht an das Endgerät des Nutzers übertragen wird und dass die Identifikationsdaten des Erzeugers der Sprachnachricht und/oder zumindest die Teile des in Text umgewandelten Inhaltes der Sprachnachricht auf dem Endgerät angezeigt werden, **dadurch gekennzeichnet, dass** bei Erweiterung der elektronischen Nachricht um zumindest Teile des Inhaltes der Sprachnachricht, der erweiterten elektronischen Nachricht Informationsdaten zum Umfang des übertragenen Inhalts der Sprachnachricht im Vergleich zur gesamten eingegangenen Sprachnachricht hinzugefügt werden.

2. Verfahren nach Anspruch 1, **dadurch gekennzeichnet, dass** die erweiterte elektronische Nachricht in Form einer Textnachricht, insbesondere in Form einer Textnachricht nach dem SMS-Standard (Short Messaging Service), an das Endgerät des Nutzers übertragen wird.

3. Verfahren nach Anspruch 1 oder 2, **dadurch gekennzeichnet, dass** die elektronische Nachricht um Identifikationsdaten in Form einer Absenderkennung des Erzeugers der Sprachnachricht, insbesondere in Form einer Telefonnummer und/oder eines Namens, erweitert wird.

4. Verfahren nach einem der Ansprüche 1 bis 3, **dadurch gekennzeichnet, dass** die Rechnereinheit eine Einrichtung zur automatischen Spracherkennung aufweist, durch die die Sprachnachricht in der Rechnereinheit zumindest teilweise in eine Textnachricht umgewandelt wird, und dass zumindest Teile der in eine Textnachricht umgewandelten Inhalte der Sprachnachricht in der Rechnereinheit der elektronischen Nachricht hinzugefügt werden.

5. Verfahren nach Anspruch 4, **dadurch gekennzeichnet, dass** die Einrichtung zur automatischen Spracherkennung eine Analyseeinrichtung aufweist, in welcher zumindest Teile der Inhalte der Sprachnachricht quantitativ und/oder qualitativ bewertet werden.

6. Verfahren nach Anspruch 5, **dadurch gekennzeichnet, dass** die Analyseeinrichtung eine Komparatoreinrichtung aufweist, in der die analysierten Inhalte der Sprachnachricht mit festgelegten oder veränderbaren Referenzsprachinhalten, die in einer der Rechnereinheit zugeordneten Speichervorrichtung abgelegt sind, verglichen werden und dass bei Übereinstimmung von Inhalten der Sprachnachricht mit Referenzsprachinhalten diese übereinstimmenden Inhalte der elektronischen Nachricht hinzugefügt werden.

7. Rechnereinheit, welche Bestandteil eines Kommunikationsnetzes ist und welche zur Benachrichtigung eines Nutzers eines elektronischen Endgeräts ausgebildet ist, dass für den Nutzer eine Sprachnachricht vorliegt, **dadurch gekennzeichnet, dass** diese Mittel zur Durchführung des Verfahrens nach einem der Ansprüche 1 bis 6 aufweist.

8. Kommunikationssystem, aufweisend ein Kommunikationsnetz, eine Vielzahl von elektronischen Endgeräten sowie eine Rechnereinheit, welche Bestandteil des Kommunikationsnetzes ist und welche zur Benachrichtigung eines Nutzers eines elektronischen Endgeräts ausgebildet ist, dass für den Nutzer eine Sprachnachricht vorliegt, **dadurch gekennzeichnet, dass** die Rechnereinheit Mittel zur Durchführung des Verfahrens nach einem der Ansprüche 1 bis 6 aufweist.

9. Kommunikationssystem nach Anspruch 8, **dadurch gekennzeichnet, dass** das Kommunikationsnetz als Mobilfunknetz und dass wenigstens ein Endgerät als Mobiltelefon und/oder PDA (Personal Digital Assistant) und/oder als Smartphone und/oder als Notebook ausgebildet ist.

## Claims

1. Method of informing a user of an electronic terminal which is part of a communications network that there is a voice message for the user, wherein at least one computer unit is provided which is part of the communications network and which is adapted to inform a user of an electronic terminal that there is a voice message for the user, wherein the voice message received is at least temporarily stored in the computer unit and is made available to the user and wherein an electronic message informing of the receipt of the voice message is generated in the computer unit and transmitted to the user's terminal, said message indicating the time of receipt of the voice message in the computer unit, wherein in the computer unit the electronic message is expanded to include identification data as to the originator of the voice message and/or at least some parts of the content of the voice message converted into text, in that the expanded electronic message is transmitted to the user's terminal and in that the identification data of the originator of the voice message and/or at least the parts of the content of the voice message converted into text are displayed on the terminal, **characterised in that** when the electronic message is expanded to include at least part of the content of the voice message, information data as to the extent of the transmitted content of the voice message in relation to the total voice message received are added to the expanded electronic message.

2. Method according to claim 1, **characterised in that** the expanded electronic message is sent to the user's terminal in the form of a text message, in particular in the form of a text message according to the SMS (Short Messaging Service) standard.

3. Method according to claim 1 or 2, **characterised in that** the electronic message is expanded to include identification data in the form of a send identifier of the originator of the voice message, in particular in the form of a telephone number and/or a name.

4. Method according to one of claims 1 to 3, **characterised in that** the computer unit comprises means for automatic speech recognition by means of which the voice message is at least partly converted into a text message in the computer unit, and **in that** at least part of the contents of the voice message converted into a text message is added to the electronic message in the computer unit.

5. Method according to claim 4, **characterised in that** the automatic speech recognition means comprise an analysing device in which at least part of the contents of the voice message is evaluated quantitatively and/or qualitatively.

6. Method according to claim 5, **characterised in that** the analysing device comprises a comparator device in which the analysed contents of the voice message are compared with fixed or variable reference speech contents which are stored in a memory associated with the computer unit, and **in that** if the contents of the voice message agree with reference speech contents these corresponding contents are added to the electronic message.

7. Computer unit which is part of a communications network and which is adapted to inform the user of an electronic terminal that there is a voice message for the user, **characterised in that** it comprises means for carrying out the method according to one of claims 1 to 6.

8. Communications system comprising a communications network, a plurality of electronic terminals and a computer unit which is part of the communications network and which is adapted to inform a user of an electronic terminal that there is a voice message for the user, **characterised in that** the computer unit comprises means for carrying out the method according to one of claims 1 to 6.

9. Communications system according to claim 8, **characterised in that** the communications network is constructed as a mobile telephone network and **in that** at least one terminal is constructed as a mobile telephone and/or PDA (Personal Digital Assistant) and/or as a smartphone and/or as a Notebook.

## Revendications

1. Procédé destiné à informer l'utilisateur d'un terminal électronique, lequel est un composant d'un réseau de communication, qu'un message vocal a été déposé, sachant qu'au moins un poste informatique est prévu, lequel est un composant du réseau de communication et lequel est conçu pour informer un utilisateur d'un terminal électronique qu'un message vocal lui étant destiné a été déposé, sachant que le message vocal déposé est au moins temporairement sauvegardé dans le poste informatique et qu'il peut être consulté par l'utilisateur du poste informatique, et sachant qu' un message électronique informant de la présence d'un message vocal est généré par le poste informatique et transmis au terminal de l'utilisateur, lequel donne la date et l'heure de dépôt du message vocal dans le poste informatique, sachant que dans le poste informatique, le message électronique comprend aussi les données d'identification de l'expéditeur du message vocal et/ou du moins certaines parties du contenu du message vocal converti en texte, sachant que le message électronique complété est transmis au terminal de l'utilisateur et que les données d'identification de l'expéditeur du message vocal et/ou au moins les parties du contenu du message vocal converties en texte sont affichées sur le terminal, **caractérisé en ce que** lors de l'extension du message électronique à au moins certaines parties du contenu du message vocal, des données informatives destinées à compléter le contenu du message vocal transmis par rapport au message vocal déposé, sont ajoutées au message électronique complété.

2. Procédé selon la revendication 1, **caractérisé en ce que** le message électronique complété est transmis sous forme de texte, en particulier sous forme de texte conforme aux standard SMS (Short Messaging Service) au terminal de l'utilisateur.

3. Procédé selon la revendication 1 ou 2, **caractérisé en ce que** le message électronique est accompagné de données d'identification sous forme de reconnaissance de l'expéditeur du message vocal, en particulier sous la forme d'un numéro de téléphone et/ou d'un nom.

4. Procédé selon l'une des revendications 1 à 3, **caractérisé en ce que** le poste informatique présente un dispositif de reconnaissance vocale automatique, par le biais duquel le message vocal est converti au moins partiellement en texte dans le poste informatique et **en ce qu'**au moins certaines parties des contenus du message vocal converties en texte dans le poste informatique sont ajoutées au message électronique.

5. Procédé selon la revendication 4, **caractérisé en ce que** le dispositif de reconnaissance vocale automatique présente un système d'analyse dans lequel la qualité et/ou le volume d'au moins certaines parties des contenus du message vocal seront analysés.

6. Procédé selon la revendication 5, **caractérisé en ce que** le système d'analyse présente un système de comparaison dans lequel les contenus du message vocal analysés sont comparés avec des contenus vocaux de référence standards ou modifiables qui sont enregistrés dans une mémoire affectée au poste informatique et **en ce que** lorsque les contenus du message vocal concordent avec des contenus vocaux de référence, ces contenus concordant sont ajoutés au message électronique.

7. Poste informatique étant un composant d'un réseau de communication et étant conçu pour informer l'utilisateur d'un terminal électronique qu'un message vocal lui étant destiné a été déposé, **caractérisé en ce que** celui-ci présente des techniques servant à exécuter le procédé selon l'une des revendications 1 à 6.

8. Système de communication présentant un réseau de communication, un grand nombre de terminaux électroniques de même qu'un poste informatique, lequel est un composant du réseau de communication et lequel est conçu pour informer l'utilisateur d'un terminal électronique qu'un message vocal lui étant destiné a été déposé, **caractérisé en ce que** le poste informatique présente des techniques servant à exécuter le procédé selon l'une des revendications 1 à 6.

9. Système de communication selon la revendication 8, **caractérisé en ce que** le réseau de communication consiste en un réseau de radiocommunication mobile et **en ce qu'**au moins un terminal consiste en un téléphone portable et/ou PDA (Personal Digital Assistant) et/ou en un Smartphone et/ou en un ordinateur portable.
